# EUROPEAN PATENT APPLICATION

(11) **EP 4 797 075 A1**
(43) Date of publication of application: **26.08.2026**
(21) Application number: 26156732.5
(22) Date of filing: 05.02.2026
(51) Int. Cl.: G06F 8/36, G06F 8/61, G06F 8/75

(54) **SYSTEM AND METHOD FOR GENERATING A CUSTOM OPERATING SYSTEM AND SOFTWARE DEVELOPMENT KIT PACKAGE**

(30) Priority: 19.02.2025 US 202519057447
(71) Applicant: Microsoft Technology Licensing, LLC, Redmond, WA 98052 (US)
(72) Inventor: PERGA, Massimo, Redmond, Washington, 98052 (US); DHANJAL, Chanpreet, Redmond, Washington, 98052 (US); KECSKEMETI, Karoly Z., Redmond, Washington, 98052 (US); NDOUTOUME, Romain Vianney, Redmond, Washington, 98052 (US)
(74) Representative: CMS Cameron McKenna Nabarro Olswang LLP

(57) **Abstract**

A method, computer program product, and computing system for developing a custom operating system (OS) and software development kit (SDK) package. A feature of an application is determined and a subset of operating system (OS) software components of a plurality of OS software components available for the OS is identified, the subset of OS software components being required to implement the feature. An OS is assembled with the subset of OS software components. A subset of software development kit (SDK) software components from a plurality of SDK software components available for a SDK, the subset of SDK software components being associated with the subset of OS software components. The SDK is assembled with the subset of SDK software components and a software package including the OS and the SDK is generated.

## Description

### Background

Monolithic operating systems (OSs) include all of the functionality needed to run most applications that a user is expected to run on the OS. Likewise, monolithic software development kits (SDKs) include all of the components that enable a user to create applications for a specific platform, framework, or OS. In many cases, however, running a monolithic OS and/or a monolithic SDK is undesirable, as the additional resources required to run the full systems can be unnecessary and can affect the speed and efficiency of the operations carried out by the applications. Modular OSs and modular SDKs are available, but user inexperience and error in setting up modular OSs and modular SDKs can result in unnecessary resource use and/or improperly configured applications.

### Brief Description of the Drawings

FIG. 1 is a diagrammatic view of an example OS building tool;
FIG. 2 is a flowchart showing an example operation of the software package build process;
FIG. 3 is a diagrammatic view of an example OS and SDK build architecture; and
FIG. 4 is a diagrammatic view of an example computer system, and software package build process coupled to a distributed computing network.

Like reference symbols in the various drawings indicate like elements.

### Summary

The inventions is set out in the appended claims.

### Detailed Description

When executing an application, an OS is used to provide the computing resources and connections between peripherals computing components (e.g., user interfaces, input devices, network devices). An OS is deployed as a monolithic OS or a modular OS. In a monolithic OS, all system services and functionalities are integrated and executed as a single, large software package. This means that the kernel, device drivers, file system management, networking stack, and other core functionalities are all part of the same software package and share the same address space. While monolithic architectures offer simplicity and direct access to system resources, they can suffer from a lack of modularity, scalability (i.e., the ability to increase or decrease performance in response to changes in or demands of the application), and fault isolation. For example, failure or instability of a portion of the monolithic OS that is not relevant for the particular application can potentially affect the entire system, leading to unnecessary system crashes or instability. Further, a monolithic OS can require computing resources (e.g., central processing unit (CPU) cycles, memory space) and functionality that are not needed for the operation of the particular application, resulting in inefficient use of resources.

In contrast, a modular OS employs a more layered and compartmentalized architecture, where system functionalities are organized into separate, combinable modules. Each module encapsulates specific functionality, such as device drivers, file systems, networking protocols, or security mechanisms, and communicates with other modules through defined interfaces. This modular design promotes increased specialization, scalability, and fault isolation, as modules can be developed, tested, and updated independently without affecting other parts of the system.

However, manually configuring a modular OS requires specific knowledge of the modules and/or features required for the particular applications and can be prone to incorrect or inefficient configurations.

Software development kits (SDKs) include various components that enable a user to create applications for a specific platform, framework, or OS. SDKs streamline the development process by offering developers access to essential resources needed to build software that integrates smoothly with the target platform's features and services. These resources typically include Application Programming Interfaces (APIs) that expose the functionality of the platform, development tools such as compilers and debuggers, pre-written code modules or libraries for common tasks, comprehensive documentation to guide developers, and sample code to demonstrate usage patterns and best practices. SDKs are used by developers to create high-quality applications efficiently, as they provide the necessary building blocks and guidance to leverage the capabilities of the underlying platform effectively.

Implementations of the disclosure facilitate the generation of a custom software package including a modular OS and a modular SDK tailored to a specific application by automatically identifying software components for inclusion in the modular OS and SDK package that effectuate the specific application. As additional features are required by the application, corresponding software components that provide the corresponding features are automatically added to the custom software package by modifying the modular OS and/or the modular SDK. In this manner, user error, for example, in over-provisioning unnecessary software packages or not including necessary software packages for proper operation of the application, are eliminated.

In some implementations, software package build process 10 determines a feature used in an application. An application is a program or group of programs designed to perform specific tasks for users. These tasks can range from productivity and business functions to entertainment and communication. Software applications are built to run on various platforms, including desktop computers, mobile devices, and web browsers. A feature of an application is a function or set of functions that an application can perform. Table 1 shows an example listing of features that may be performed by an application. This table is for example only, and additional features not shown in Table 1 are considered to be within the scope of the disclosure.

**Table 1**

| **Feature name** | **Description** |
|---|---|
| Applications and Application Support | Adds redistributable packages, disk management tools, limited number of fonts and basic applications |
| Audio | Enables audio playback and recording |
| Bluetooth^{®} | Enables Bluetooth^{®} support |
| Camera | Adds support for using camera(s) |
| Debugging | Adds kernel debugging support |
| Device provisioning and administration | Includes, basic networking, and other tools to allow device provisioning with and administration. |
| Graphics support | Adds support to for running multimedia-related applications. |
| Multimedia | Enables Multimedia playback using basic CODECs |
| Optional File Systems | Enables support Universal Disk Format System (UDFS) and adds functionality to scan and fix errors on hard drives |
| Peripherals and Network Adapters | Enhanced driver support, class driver extensions, Plug and Play (PnP) infrastructure, common network adapters |
| | and other elements to enable device specific drivers to communicate with the hardware |
| Power management | Enables power management and various power states |
| Sensors | Basic sensors support |
| Server Message Block (SMB) | Enables SMB client, Lanman and multiple Universal Naming Convention (UNC) provider (MUP) support |
| Universal Serial Bus (USB) support | Includes minimal support for devices with USB protocol and Human Interface Devices (HID) protocol |
| Virtualization Support | Adds basic virtualization support |
| Wi-Fi^{®} | Enables wireless local area network (LAN) support |

In some implementations, a user provides an application or a selection of an application (e.g., from a user interface) to software package build process 10 for which a software package is to be built using a modular OS and a modular SDK. The software package build process determines the feature used in the application by referencing a data store including a number of known applications and features associated with the number of known applications; identifying the application among the number of known applications; or identifying the feature based on its association with the application. For example, software package build process 10 analyzes the application provided by the user to determine a feature that is used by the application. If the application has been analyzed previously, the feature information is stored in a data store or other data structure that includes known applications and features associated with those applications.

In some implementations, determining the feature used in the application includes performing an analysis of the application to determine the feature. In some implementations, the analysis of the application includes a static analysis of the application code to determine features used in the application. For example, if the particular application has not previously been analyzed and the associated features not identified and stored in the data store, software package build process 10 performs a static analysis on the application to identify the feature(s) from the application code.

For example, performing a static analysis includes using various tools (e.g., an API validation tool and source code analysis tools) to analyze the application. In one example, software package build process 10 performs a static analysis using an API validation tool to determine the feature. In some implementations, the API validation tool is used to perform a comprehensive examination of API definitions and configurations of the application, inspecting various aspects such as syntax, structure, and compliance with industry guidelines. This tool identifies APIs used by an application and, from that, features required by the application. In another example, software package build process 10 performs a static analysis using a source code analysis tool, such as static code analyzers or dependency checkers, which scans the application's codebase to detect and report on API calls, library imports, and external dependencies. Accordingly, software package build process 10 determines which features are used by an application using the static analysis of an application's APIs and/or source code.

In some implementations, software package build process 10 identifies a subset of operating system (OS) software components of a plurality of OS software components available for the OS, the subset of OS software components being required to implement the feature. In some implementations, a subset of OS software components includes at least one OS software component but less than the total set of OS software components. When assembled with an OS base image for use in connection with a particular application, OS software components can operate either independently to enable the particular application to perform a specific feature, or in combination with one or more other software components to enable the particular application to perform the specific feature. Referring again to Table 1, an example of a feature that may be implemented by a single OS software component is the Bluetooth^{®} feature. An example of a feature that may be implemented by multiple software components is the multimedia feature, which may require a software component for audio playback, a software component for video playback, and a networking software component to receive streaming content.

In some implementations, software package build process 10 assembles an OS with the subset of OS software components, the subset of OS software components including fewer OS software components than the plurality of OS software components available for the OS. As discussed above, a modular OS is a type of OS architecture in which modules that perform specific functions are added to enable the OS to operate with specific applications. In a modular OS, the architecture includes separate, functional components, each responsible for specific functions or services. The modules are configured to work together to perform the specific functions or services. These modules can be independently developed, tested, and updated, allowing for greater flexibility, scalability, and maintainability of the OS. Additionally, modular OS architectures enable customization and extensibility, as developers can easily add or remove modules to tailor the system to specific hardware configurations or application requirements. By decoupling functionality into modular components, modular OS promotes better resource utilization, system stability, and overall performance, making them well-suited for a wide range of computing environments, from embedded systems to cloud computing platforms.

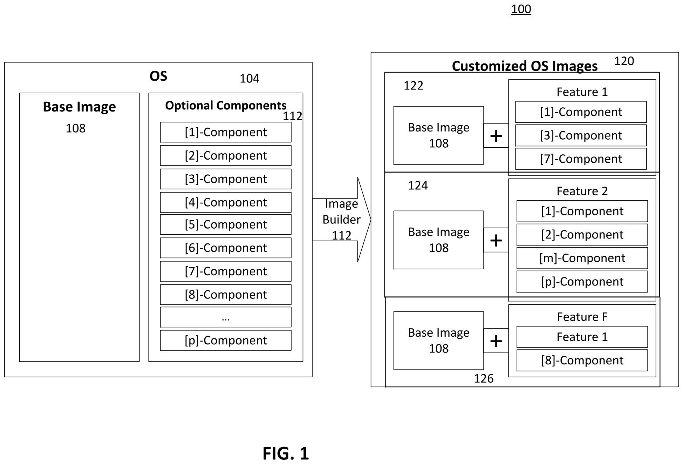

Referring to FIG. 1, the assembly of a modular OS is described. OS 104 includes a base image 108 and optional OS software components 112 including OS software components [1] through [p]. An OS base image refers to a foundational or starting point from which applications are built and run. The OS base image serves as the core environment upon which additional OS software components and configurations can be layered to create a complete application runtime environment. The OS base image typically contains the minimal set of OS software components necessary to support the execution of applications, including the OS kernel, system libraries, and essential runtime utilities. The OS base image provides a standardized and consistent platform for deploying applications across different environments.

Optional OS software components [1]-[p], when assembled with the OS base image for use in connection with a particular application, can operate either independently to enable the particular application to perform an associated feature, or in combination with one or more other software components to enable the particular application to perform the associated feature. Through the use of an image builder function 112, a user is able to select OS software components and combinations of OS software components to include with the OS base image 108 to assemble a custom OS tailored for use with the particular application for which it is assembled.

In some implementations, assembling the OS includes packaging a number of OS software components required for implementing the feature with an OS base image. For example, customized OS images 120 are the result of the specific selection and inclusion of OS software components [1]-[p], based on the feature to be run by the application. For example, modular OS 122 includes the OS base image 108 and the OS software components that, when combined, enable the OS to run Feature 1, specifically, OS software components [1], [3], and [7]. Modular OS 124 includes the OS base image 108 and the OS software components that, when combined, enable the OS to run Feature 2, specifically, OS software components [1], [2], [m], and [p]. Modular OS 126 includes the OS base image 108 and the OS software components that enable the OS to run Feature F, specifically, OS software component 8. The goal is to include only the functionality that is required for the enablement of the required features. In this manner, software package build process 10 assembles the modular OS to include only the subset of OS software components required to enable the application to use the desired feature.

While, as described above, modular OSs are assembled to be tailored to the operation of a particular application, the manual selection of packages to enable the operation of features is prone to user error, and, as such, incorrect combinations of packages may be selected, required packages may be omitted, and/or additional packages that are not required may be included. This can result in performance inefficiencies and/or increase operational latencies.

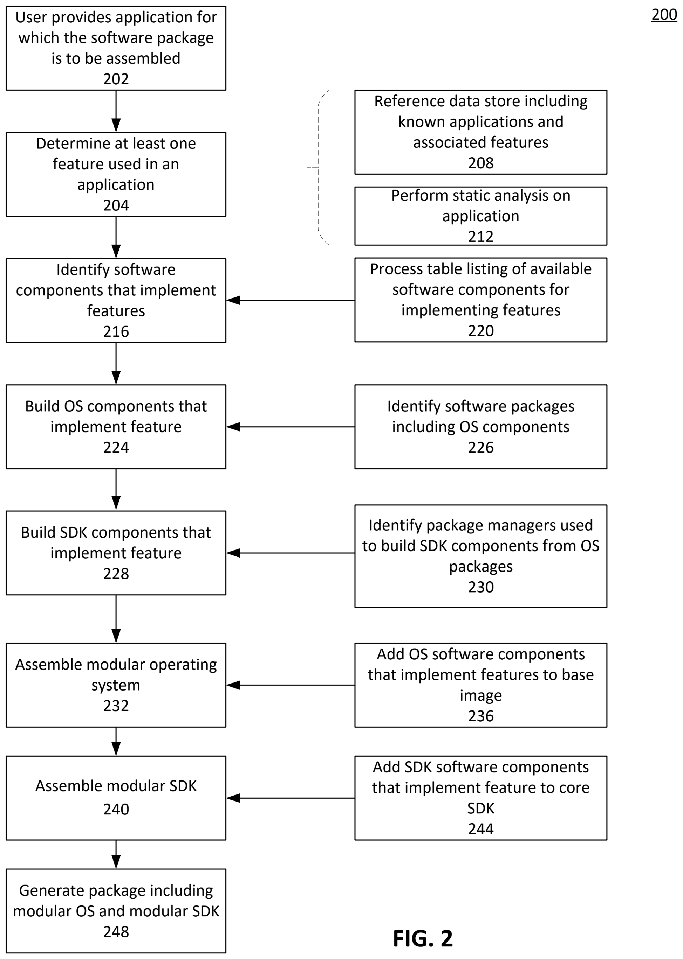

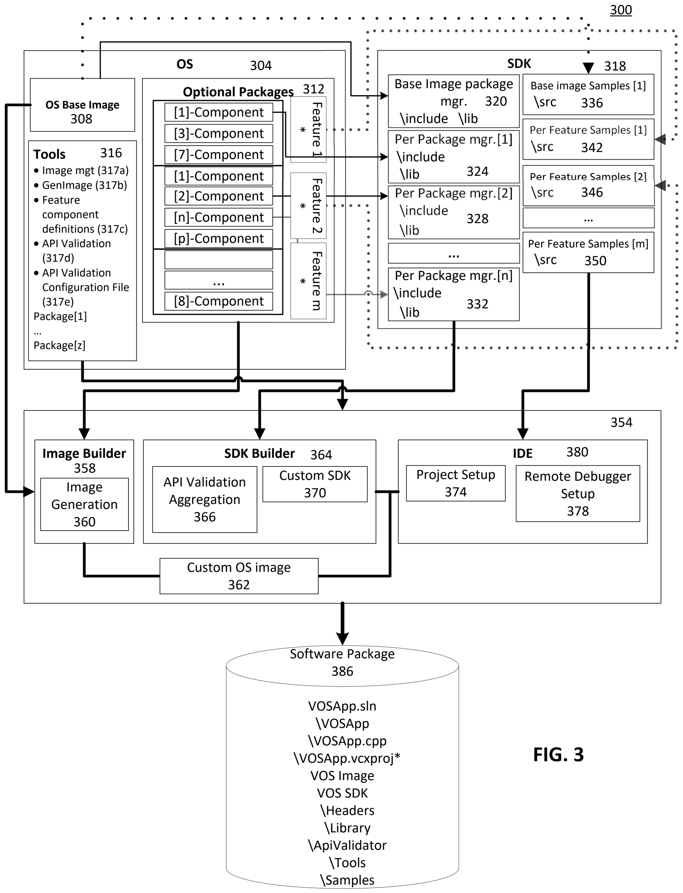

Referring now to FIGS. 2 and 3, an implementation of the disclosure will be described. FIG. 2 is a flowchart 200 showing the operation of the software package build process according to implementations of the disclosure and FIG. 3 is a diagrammatic view of a software package build system 300. System 300 includes OS engine 304, which includes the OS base image 308, optional packages 312, which are used in the assembly of the modular OS, and tools 316, which enable the analysis of applications and the generation of the modular OS. Tools include an image management tool 317a, a genimage tool 317b, feature package definitions 317c, an API validator tool 317d, and an API validator configuration file 317e, used by the API validator tool 317d.

The image management tool 317a is a command-line utility used for servicing OS images. It is primarily used for tasks related to deployment, maintenance, and repair of OS installations, including both online and offline scenarios. With image management tool 317a, a wide range of operations can be performed on OS image files, such as installing or uninstalling features, packages, or updates; adding or removing drivers; configuring international settings; and repairing corrupted system files. The genimage tool 317b is a tool used for generating disk images, including installing OSs, configuring system settings, installing software packages, and customizing the image to meet specific requirements or standards. Feature component definitions 317c provide explanations of the various features to enable informed selection and implementation of the features associated with the application. As discussed above, an API validation tool (e.g., API validation tool 317d) is used to perform a comprehensive examination of API definitions and configurations of the application, inspecting various aspects such as syntax, structure, and compliance with industry guidelines. API validation configuration file 317e is a configuration file used by the API validation tool 317d, which is designed to analyze and assess the quality, correctness, and adherence of APIs to established standards and best practices. The configuration file provides rules, settings, and specifications for the API validation process. In one example, API validation configuration file 317e is an Extensible Markup Language (XML) file. In another example, API validation configuration file 317e is a JavaScript Object Notation (JSON) file. In another example, API validation configuration file 317e is YAML Ain't Markup Language (YAML). Within this file, developers can define various validation rules, constraints, and criteria that the API validation tool 317d will use to evaluate API definitions and configurations.

At action 202, a user provides, to OS engine 304, an application for which a software package is built using a modular OS and an associated modular SDK. The application is analyzed to determine at least one feature that is used by the application, 204. If the application is a commonly used application that has been analyzed previously, the feature information is stored in a data store that includes known applications and features associated with those applications. In this case, since the specific features used by the application are known, the data store is referenced to identify the features associated with the application, 208.

If the particular application has not previously been analyzed and the associated features not identified and stored in the data store, a static analysis is performed on the application by the API validation tool 317d, as described above, 212. Once the at least one feature required by the application is determined, 204, the software component that implements the feature is identified, 216. This may be done by consulting a table in memory (not shown) to determine which component is available for implementing the feature, 220. Once the software components are identified, the components that implement the feature are built, 224.

In the example shown at 300 in FIG. 3, the application has been determined to require Feature 1, Feature 2, and Feature m. As shown at 312, Feature 1 requires software components [1], [3], and [7], Feature 2 requires software components [1], [2], [n], and [p], and Feature m requires software component [8]. In some implementations, groups of software components define software packages. Accordingly, once the feature that, either individually or in combination with other features, are identified 216, a software package including the OS software components that implement the feature is identified 226.

In some implementations, software package build process 10 identifies a subset of software development kit (SDK) software components from a plurality of SDK software components available for a SDK, the subset of SDK software components being associated with the subset of OS software components. For example, supplying an all-encompassing SDK (base image plus all optional features) could lead to confusion during the development of applications, as certain APIs may not be exposed by the generator variant created using a specific composition. Accordingly, software package build process 10 assembles a modular SDK by identifying a subset of SDK software components that define a core set of OS functionalities and development tools. In some implementations, a subset of SDK software components includes at least one SDK software component but less than the total set of SDK software components. An optional set of SDK software components, each one identified by a descriptor (e.g., a list of APIs provided by the feature) and libraries to consume the feature from an application may also be included the subset of SDK software components. In some implementations, the SDK software components contain a variety of data points that make development possible and easy against the modular OS. These SDK software components carry a list of supported APIs, the containing libraries for these APIs, the associated header files, input files required for comparing APIs used existing executables to APIs supported by the custom-built OS, files for an Integrated Development Environment (IDE), and a variety of other package related information. An IDE is a software application that provides comprehensive tools and features for software development in a single integrated interface. IDEs are designed to streamline the development process by combining components such as code editing, debugging, compilation, version control, and/or project management into a cohesive environment. At its core, an IDE typically includes a code editor with features like syntax highlighting, code completion, and code refactoring tools to help developers write and edit code efficiently. Additionally, IDEs often provide built-in compilers, interpreters, or runtime environments for testing and executing code directly within the development environment. Example IDEs include Visual Studio^{®} software from Microsoft Corporation and Eclipse^{®} software from the Eclipse Foundation.

In some implementations, each modular OS component (e.g., the OS base image plus all optional software components) requires a corresponding SDK component. This provides a self-contained SDK for any supported combination of the OS base image and optional features. In some implementations, system 300 includes composable SDK functionality 318, in which base image package manager 320 is generated based on OS base image 308, package manager [1] 324 is generated based on OS software component [1], package manager [2] 328 is generated based on OS software component [2], and package manager [n] 332 is generated based on OS software component [n]. While not shown, a package manager is generated corresponding to each OS software component used to enable each feature in the OS. A package manager is a pre-configured, reusable package containing the foundational components required for building and deploying software applications within an SDK. In one example, the package manager is NuGet^{™} for the .NET ecosystem. In another example, the package manager is Gradle^{™} for the Java ecosystem. In another example, the package manager is Homebrew^{™} for the macOS^{®} ecosystem.

Once the package managers corresponding to the OS software components, 230, are configured, the SDK components that implement the feature from the application in the SDK are built, 228. For example, software package build process 10 identifies a subset of SDK software components (e.g., base image and package samples 336, 342, 346, and 350) based on the OS base image 308 and the corresponding features implemented in the OS 304. In some implementations, the SDK software components (e.g., package samples 336, 342, 346, and 350) include instructions for the user on usage of the SDK for each feature of the application.

In some implementations, software package build process 10 assembles the SDK with the subset of SDK software components, the subset of SDK software components including fewer SDK software components than the plurality of SDK software components available for the SDK. For example, once the software components of the OS and the SDK are identified, 224/228, the modular OS is assembled 232 by adding the OS software components that implement the features to the OS base image 236. Likewise, the modular SDK is assembled, 240, by adding the SDK software components that implement the feature to the core SDK, 244.

In some implementations, software package build process 10 generates a software package including the modular OS and the modular SDK. For example, a software package generated from the modular OS and the modular SDK provides a uniform set of APIs and tools that are distributed to developers as an on-demand package. Unlike monolithic OS, the software package is designed to enable a custom-built OS that meets the exact performance and size requirements of the developers for desired features of a particular application. Referring again to FIG. 3, actions 232, 236, 240 and 244 are executed in OS builder component 354. An OS builder 354 includes image builder 358, SDK builder 364, and IDE setup 380. Assembling the OS with the subset of OS software components (i.e., action 232) and the adding of the subset of OS software components to OS base image 308 (e.g., action 236) are implemented in image builder 358, which receives the OS base image 308 and the subset of OS software packages required to implement the feature. Image builder 358 performs an image generation process 360 to generate a custom OS image 362 that is tailored to the application and the feature required by the application. Likewise, the assembling of the SDK with the subset of SDK software components (e.g., action 240) and the adding of the subset of SDK software components to a core SDK (e.g., action 244) are executed in SDK builder 364, which receives the package managers 320, 324, 328 ... 332 from composable SDK function 318 using API validation aggregation function 366 to generate custom SDK 370 that is tailored to the application and the feature required by the application. Custom OS image 362 is combined with custom SDK 370 and received by IDE setup 380.

In some implementations, IDE 380 provides a comprehensive set of tools and features for software development across various platforms and programming languages. It offers a unified and efficient environment for building, debugging, testing, and deploying software applications for desktop, web, mobile, cloud, and other platforms. The core functionality includes a code editor with syntax highlighting, code completion, refactoring, and navigation features to facilitate efficient coding. Additionally, IDE 380 offers debugging tools such as breakpoints, watch windows, and real-time code analysis to help developers identify and fix issues in their code. IDE 380 also integrates with source control systems for collaboration and version control and provides support for unit testing, code profiling, performance optimization, and code generation. In some implementations, IDE setup 380 enables the user to access the software package 386 in its development environment including a project setup function 374 and a remote debugger setup 378.

In some implementations, the software package 386 generated from modular OS and the modular SDK includes only the OS software components and SDK software components needed to enable an application to implement the desired features. This facilitates an environment where a user is only configuring and using functionality required to implement the features necessary for operation of the application. Further, since the OS and SDK are both modular, as additional features are included in the application, only those software components that are required for operation of those additional features can be added to the software package. Further still, because the software components are automatically identified and included in the software package, user error in either over-provisioning unnecessary software components or not including necessary software packages for proper operation of the application is eliminated.

### System Overview:

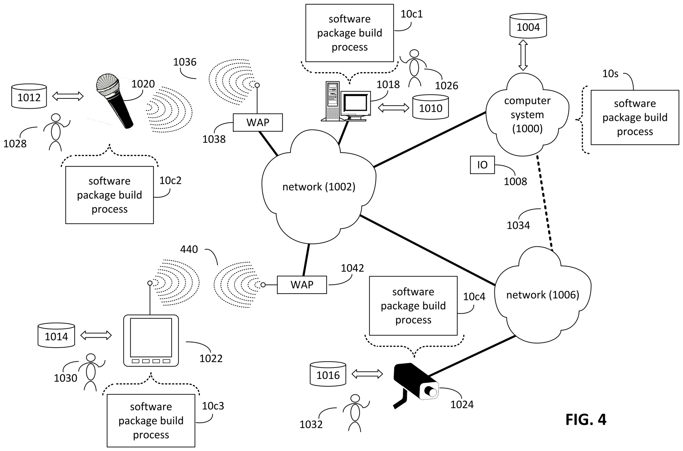

Referring to FIG. 4, there is shown a software package build process 10. Software package build process 10 may be implemented as a server-side process, a client-side process, or a hybrid server-side / client-side process. For example, software package build process 10 may be implemented as a purely server-side process via software package build process 10s. Alternatively, software package build process 10 may be implemented as a purely client-side process via one or more of software package build process 10c1, software package build process 10c2, software package build process 10c3, and software package build process 10c4. Alternatively still, software package build process 10 may be implemented as a hybrid server-side / client-side process via software package build process 10s in combination with one or more of software package build process 10c1, software package build process 10c2, software package build process 10c3, and software package build process 10c4.

Accordingly, software package build process 10 as used in this disclosure may include any combination of software package build process 10, software package build process 10c1, software package build process, software package build process 10c3, and software package build process 10c4.

Software package build process 10s may be a server application and may reside on and may be executed by a computer system 1000, which may be connected to network 1002 (e.g., the Internet or a local area network). Computer system 1000 may include various components, examples of which include: a personal computer, a server computer, a series of server computers, a mini computer, a mainframe computer, one or more Network Attached Storage (NAS) systems, one or more Storage Area Network (SAN) systems, one or more Platform as a Service (PaaS) systems, one or more Infrastructure as a Service (IaaS) systems, one or more Software as a Service (SaaS) systems, a cloud-based computational system, and a cloud-based storage platform.

A SAN includes one or more of a personal computer, a server computer, a series of server computers, a minicomputer, a mainframe computer, a RAID device and a NAS system. The various components of computer system 1000 may execute one or more OSs.

The instruction sets and subroutines of computational cost reduction process 10s, which may be stored on storage device 1004 coupled to computer system 1000, may be executed by one or more processors (not shown) and one or more memory architectures (not shown) included within computer system 1000. Examples of storage device 1004 include: a hard disk drive; a RAID device; a random-access memory (RAM); a read-only memory (ROM); and all forms of flash memory storage devices.

Network 1002 may be connected to one or more secondary networks (e.g., network 1004), examples of which include: a local area network; a wide area network; or an intranet, for example.

Various IO requests (e.g., IO request 1008) may be sent from software package build process 10s, software package build process 10c1, software package build process 10c2, software package build process 10c3 and/or software package build process 10c4 to computer system 1000. Examples of IO request 1008 include data write requests (i.e., a request that content be written to computer system 1000) and data read requests (i.e., a request that content be read from computer system 1000).

The instruction sets and subroutines of software package build process 10c1, software package build process 10c2, software package build process 10c3 and/or software package build process 10c4, which may be stored on storage devices 1010, 1012, 1014, 1016 (respectively) coupled to client electronic devices 1018, 1020, 1022, 1024 (respectively), may be executed by one or more processors (not shown) and one or more memory architectures (not shown) incorporated into client electronic devices 1018, 1020, 1022, 1024 (respectively). Storage devices 1010, 1012, 1014, 1016 may include: hard disk drives; optical drives; RAID devices; random access memories (RAM); read-only memories (ROM), and all forms of flash memory storage devices. Examples of client electronic devices 1018, 1020, 1022, 1024 include personal computing device 1018 (e.g., a smart phone, a personal digital assistant, a laptop computer, a notebook computer, and a desktop computer), audio input device 1020 (e.g., a handheld microphone, a lapel microphone, an embedded microphone (such as those embedded within eyeglasses, smart phones, tablet computers and/or watches) and an audio recording device), display device 1022 (e.g., a tablet computer, a computer monitor, and a smart television), a hybrid device (e.g., a single device that includes the functionality of one or more of the above-references devices; not shown), an audio rendering device (e.g., a speaker system, a headphone system, or an earbud system; not shown), and a dedicated network device (not shown).

Users 1026, 1028, 1030, 1032 may access computer system 1000 directly through network 1002 or through secondary network 1006. Further, computer system 1000 may be connected to network 1002 through secondary network 1006, as illustrated with link line 1034.

The various client electronic devices (e.g., client electronic devices 1018, 1020, 1022, 1024) may be directly or indirectly coupled to network 1002 (or network 1006). For example, personal computing device 1018 is shown directly coupled to network 1002 via a hardwired network connection. Further, machine vision input device 1024 is shown directly coupled to network 1006 via a hardwired network connection. Audio input device 1022 is shown wirelessly coupled to network 1002 via wireless communication channel 1036 established between audio input device 1020 and wireless access point (WAP) 1038, which is shown directly coupled to network 1002. WAP 1038 may be, for example, an IEEE 802.11a, 802.11b, 802.11g, 802.11n, Wi-Fi^{®}, and/or any device that is capable of establishing wireless communication channel 1036 between audio input device 1020 and WAP 1038. Display device 1022 is shown wirelessly coupled to network 1002 via wireless communication channel 1040 established between display device 1022 and WAP 1042, which is shown directly coupled to network 1002.

### General:

As will be appreciated by one skilled in the art, the present disclosure may be embodied as a method, a system, or a computer program product. Accordingly, the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, the present disclosure may take the form of a computer program product on a computer-usable storage medium having computer-usable program code embodied in the medium.

Any suitable computer usable or computer readable medium may be used. The computer-usable or computer-readable medium may be, for example an electronic, magnetic, optical, electromagnetic, infrared, or semiconductor system, apparatus, device, or propagation medium. More specific examples of the computer-readable medium include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, or a magnetic storage device. The computer-usable or computer-readable medium may also be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory. In the context of this document, a computer-usable or computer-readable medium may be any medium that can contain, store, communicate, propagate, or transport the program for use by or in connection with the instruction execution system, apparatus, or device. The computer-usable medium may include a propagated data signal with the computer-usable program code embodied therewith, either in baseband or as part of a carrier wave. The computer usable program code may be transmitted using any appropriate medium, including the Internet, wireline, optical fiber cable, RF, etc.

Computer program code for carrying out operations of the present disclosure may be written in an object-oriented programming language. However, the computer program code for carrying out operations of the present disclosure may also be written in conventional procedural programming languages, such as compiled programming languages like "C" programming language, "C++", and Java, or interpreted programming languages like Python, Ruby, and JavaScript. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through a local area network / a wide area network / the Internet.

The present disclosure is described with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, may be implemented by computer program instructions. These computer program instructions may be provided to a processor of a general-purpose computer / special purpose computer / other programmable data processing apparatus, such that the instructions, which execute via the processor of the computer or other programmable data processing apparatus, create means for implementing the functions/acts specified in the flowchart and/or block diagram block or blocks.

These computer program instructions may also be stored in a computer-readable memory that may direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The flowcharts and block diagrams in the figures may illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, not at all, or in any combination with any other flowcharts depending upon the functionality involved. It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the disclosure. The embodiment was chosen and described in order to best explain the principles of the disclosure and the practical application, and to enable others of ordinary skill in the art to understand the disclosure for various embodiments with various modifications as are suited to the particular use contemplated.

Alternatively or in addition to the other examples described herein, examples include any combination of the following clauses:
Clause A. A computer-implemented method, executed on a computing device, comprising: determining a feature of an application; identifying a subset of operating system (OS) software components of a plurality of OS software components available for the OS, the subset of OS software components being required to implement the feature; assembling an OS with the subset of OS software components, the subset of OS software components including fewer OS software components than the plurality of OS software components available for the OS; identifying a subset of software development kit (SDK) software components from a plurality of SDK software components available for a SDK, the subset of SDK software components being associated with the subset of OS software components; assembling the SDK with the subset of SDK software components, the subset of SDK software components including fewer SDK software components than the plurality of SDK software components available for the SDK; and generating a software package including the OS and the SDK.
Clause B. The computer-implemented method of clause A, wherein determining the feature of the application includes: referencing a data store including a number of known applications and features associated with the number of known applications, identifying the application among the number of known applications, and identifying the feature based on its association with the application.
Clause C. The computer-implemented method of clause A, wherein determining the at feature used in the application includes performing an analysis of the application to determine the feature.
Clause D. The computer-implemented method of clause C, wherein the analysis of the application includes a static analysis of the application source code to determine features used in the application.
Clause E. The computer-implemented method of clause C, wherein the analysis of the application includes a static analysis of the application using an application programming interface (API) validation tool.
Clause F. The computer-implemented method of clause A, wherein assembling the OS with the subset of OS software components includes assembling the OS with only the subset of OS software components.
Clause G. The computer-implemented method of clause A, wherein assembling the SDK with the subset of SDK software components includes assembling the SDK with only the subset of SDK software components.
Clause H. A computing system comprising: a memory; and a processor to: determine a plurality of features of an application; identify a subset of operating system (OS) software components of a plurality of OS software components available for the OS, the subset of OS software components being required to implement the plurality of features; assemble an OS with the subset of OS software components, the subset of OS software components including fewer OS software components than the plurality of OS software components available for the OS; identify a subset of software development kit (SDK) software components from a plurality of SDK software components available for a SDK, the subset of SDK software components being associated with the subset of OS software components; assemble the SDK with the subset of SDK software components, the subset of SDK software components including fewer SDK software components than the plurality of SDK software components available for the SDK; and generate a software package including the OS and the SDK.
Clause I. The computing system of clause H, wherein determining the plurality of features of the application includes: referencing a data store including a number of known applications and features associated with the number of known applications, identifying the application among the number of known applications, and identifying the plurality of features based on its association with the application.
Clause J. The computing system of clause H, wherein determining the plurality of features of the application includes performing an analysis of the application to determine the feature.
Clause K. The computing system of clause J, wherein the analysis comprises a static analysis of the application code to determine the feature used in the application.
Clause L. The computing system of clause H, wherein assembling the OS with the subset of OS software components includes determining whether each OS software component required to implement the plurality of features is included in the subset of OS software components.
Clause M. The computing system of clause H, wherein assembling the OS with the subset of OS software components includes assembling the OS with only the subset of OS software components.
Clause N. The computing system of clause H, wherein assembling the SDK with the subset of SDK software components includes assembling the SDK with only the subset of SDK software components.
Clause O. A computer program product residing on a non-transitory computer readable medium having a plurality of instructions stored thereon which, when executed by a processor, cause the processor to perform operations comprising: determining a feature of an application; identifying a subset of operating system (OS) software components of a plurality of OS software components available for the OS, the subset of OS software components being required to implement the feature; assembling an OS with only the subset of OS software components; identifying a subset of software development kit (SDK) software components from a plurality of SDK software components available for a SDK, the subset of SDK software components being associated with the subset of OS software components; assembling the SDK with the subset of SDK software components, the subset of SDK software components including fewer SDK software components than the plurality of SDK software components available for the SDK; and generating a software package including the OS and the SDK.
Clause P. The computing program product of clause O, wherein analyzing the application to determine at least one feature used in the application comprises performing a static analysis of the application to determine the feature.
Clause Q. The computer program product of clause O, wherein the analysis of the application includes a static analysis of the application using an application programming interface (API) validation tool.
Clause R. The computer program product of clause Q, wherein assembling the OS with only the subset of OS software components includes generating a custom OS image.
Clause S. The computer program product of clause O, wherein assembling the SDK with the subset of SDK software components includes assembling the SDK with only the subset of SDK software components.
Clause T. The computer program product of clause O, wherein the feature includes at least one of: application support, audio, Bluetooth^{®}, camera, debugging, device provisioning, graphics support, multimedia, optional file systems, power management, sensors, server message block (SMB) USB support, virtualization support, and wireless internet.
Clause U. A method, computer program product, and computing system for developing a custom operating system (OS) and software development kit (SDK) package. A feature of an application is determined and a subset of operating system (OS) software components of a plurality of OS software components available for the OS is identified, the subset of OS software components being required to implement the feature. An OS is assembled with the subset of OS software components. A subset of software development kit (SDK) software components from a plurality of SDK software components available for a SDK, the subset of SDK software components being associated with the subset of OS software components. The SDK is assembled with the subset of SDK software components and a software package including the OS and the SDK is generated.

A number of implementations have been described. Having thus described the disclosure of the present application in detail and by reference to embodiments thereof, it will be apparent that modifications and variations are possible without departing from the scope of the disclosure defined in the appended claims.

## Claims

1. A computer-implemented method, executed on a computing device, comprising:
determining a feature of an application;
identifying a subset of operating system, OS, software components of a plurality of OS software components available for the OS, the subset of OS software components being required to implement the feature;
assembling an OS with the subset of OS software components, the subset of OS software components including fewer OS software components than the plurality of OS software components available for the OS;
identifying a subset of software development kit, SDK, software components from a plurality of SDK software components available for a SDK, the subset of SDK software components being associated with the subset of OS software components;
assembling the SDK with the subset of SDK software components, the subset of SDK software components including fewer SDK software components than the plurality of SDK software components available for the SDK; and
generating a software package including the OS and the SDK.

2. The computer-implemented method of claim 1, wherein determining the feature of the application includes:
referencing a data store including a number of known applications and features associated with the number of known applications,
identifying the application among the number of known applications, and
identifying the feature based on its association with the application.

3. The computer-implemented method of claim 1, wherein determining the at feature used in the application includes performing an analysis of the application to determine the feature.

4. The computer-implemented method of claim 3, wherein the analysis of the application includes a static analysis of the application source code to determine features used in the application.

5. The computer-implemented method of claim 3, wherein the analysis of the application includes a static analysis of the application using an application programming interface, API, validation tool.

6. The computer-implemented method of any preceding claim, wherein assembling the OS with the subset of OS software components includes assembling the OS with only the subset of OS software components.

7. The computer-implemented method of any preceding claim, wherein assembling the SDK with the subset of SDK software components includes assembling the SDK with only the subset of SDK software components.

8. A computing system comprising:
a memory; and
a processor to:
determine a plurality of features of an application;
identify a subset of operating system, OS, software components of a plurality of OS software components available for the OS, the subset of OS software components being required to implement the plurality of features;
assemble an OS with the subset of OS software components, the subset of OS software components including fewer OS software components than the plurality of OS software components available for the OS;
identify a subset of software development kit, SDK, software components from a plurality of SDK software components available for a SDK, the subset of SDK software components being associated with the subset of OS software components;
assemble the SDK with the subset of SDK software components, the subset of SDK software components including fewer SDK software components than the plurality of SDK software components available for the SDK; and
generate a software package including the OS and the SDK.

9. The computing system of claim 8, wherein determining the plurality of features of the application includes:
referencing a data store including a number of known applications and features associated with the number of known applications,
identifying the application among the number of known applications, and
identifying the plurality of features based on its association with the application.

10. The computing system of claim 8, wherein determining the plurality of features of the application includes performing an analysis of the application to determine the feature.

11. The computing system of claim 10, wherein the analysis comprises a static analysis of the application code to determine the feature used in the application.

12. The computing system of any of claims 8 to 11, wherein assembling the OS with the subset of OS software components includes determining whether each OS software component required to implement the plurality of features is included in the subset of OS software components.

13. The computing system of any of claims 8 to 11, wherein assembling the OS with the subset of OS software components includes assembling the OS with only the subset of OS software components.

14. The computing system of claim 8 to 13, wherein assembling the SDK with the subset of SDK software components includes assembling the SDK with only the subset of SDK software components.

15. A computer program product residing on a computer readable medium having a plurality of instructions stored thereon which, when executed by a processor, cause the processor to perform operations comprising:
determining a feature of an application;
identifying a subset of operating system, OS, software components of a plurality of OS software components available for the OS, the subset of OS software components being required to implement the feature;
assembling an OS with only the subset of OS software components;
identifying a subset of software development kit, SDK, software components from a plurality of SDK software components available for a SDK, the subset of SDK software components being associated with the subset of OS software components;
assembling the SDK with the subset of SDK software components, the subset of SDK software components including fewer SDK software components than the plurality of SDK software components available for the SDK; and
generating a software package including the OS and the SDK.
